# Europäisches Patentamt

## European Patent Office

## Office européen des brevets

(11) Veröffentlichungsnummer: **0 163 600**

**B1**

(12) # EUROPÄISCHE PATENTSCHRIFT

(45) Veröffentlichungstag der Patentschrift:
25.11.87

(21) Anmeldenummer: **85810184.3**

(22) Anmeldetag: **25.04.85**

(51) Int. Cl.⁴: **B 23 B 45/16**

(54) Staubschutzkappe.

(30) Priorität: **21.05.84 DE 3418882**

(43) Veröffentlichungstag der Anmeldung:
**04.12.85 Patentblatt 85/49**

(45) Bekanntmachung des Hinweises auf die Patenterteilung:
**25.11.87 Patentblatt 87/48**

(84) Benannte Vertragsstaaten:
**CH DE FR GB LI**

(56) Entgegenhaltungen:
**DE-A-3 328 886**

(73) Patentinhaber: **HILTI Aktiengesellschaft, FL- 9494 Schaan (LI)**

(72) Erfinder: **Theissig, Werner, Franz- Nissl- Strasse 40, D-8000 München 50 (DE)**
Erfinder: **Rumpp, Gerhard, Ing. grad., Schornstrasse 2, D-8084 Inning (DE)**

(74) Vertreter: **Wildi, Roland, Hilti Aktiengesellschaft Patentabteilung, FL- 9494 Schaan (LI)**

## Beschreibung

Die Erfindung betrifft eine z. B. aus der DE-A-332 886 bekannte napfartige Staubschutzkappe für der Aufnahme von Bohrwerkzeugen in Handbohrmaschinen dienende Werkzeughalter, deren Mantel Verbindungselemente zur Festlegung und deren Boden eine Durchtrittsöffnung für das Werkzeug aufweist, wobei der Boden eine elastische Dichtlippe zum dichtenden Umfassen des Werkzeuges aufweist.

Staubschutzkappen der erläuterten Art dienen dazu, die relativ schmutzempfindlichen Werkzeughalter von Handbohrmaschinen während des Bohrvorganges vor Bohrklein und Bohrstaub zu schützen.

Trotz der Verwendung elastischer Materialien, wie Gummi und dergleichen, haben die bekannten Staubschutzkappen den Nachteil einer stark begrenzten radialen Aufweitbarkeit der Durchtrittsöffnung. Ein und dieselbe Staubschutzkappe ist also nur für einen kleinen Bereich von Werkzeugdurchmessern geeignet. Es besteht demnach das Problem, dass bei kleinerem Werkzeugdurchmesser unbefriedigende Dichtung erzielt wird, bei grösserem Werkzeugdurchmesser hingegen starke Reibung auftritt. Zudem tritt bei grossem Werkzeugdurchmesser ein Überdehnen des Randbereichs ein, was zu Beschädigungen führt.

Aus diesem Grunde wurden Staubschutzkappen mit einer Durchtrittsöffnung im Boden bekannt, deren Randbereich mit auf das Zentrum der Durchtrittsöffnung gerichteten Schlitzen versehen ist. Die Schlitze verbessern dis Aufweitbarkeit der Durchtrittsöffnung, so dass ein grösserer Bereich an Werkzeugdurchmessern einsetzbar ist. Der Nachteil dieser Staubschutzkappen ist eine unbefriedigende Dichtung bei allen Werkzeugdurchmessern, da durch die Schlitze Bohrstaub und Bohrklein zum Werkzeughalter gelangen.

Der Erfindung liegt die Aufgabe zugrunde, eine Staubschutzkappe zu schaffen, die für einen grossen Bereich von Werkzeugdurchmessern unter Erzielung guter Dichtung geeignet ist.

Erfindungsgemäss wird die Aufgabe dadurch gelöst, dass die Dichtlippe einer gattungsgemäßen Staubschutzkappe als elastisch federnder Ringwulst ausgebildet ist.

Unter einem Ringwulst der erfindungsgemässen Art wird ein etwa schlauchförmiges elastisches Gebilde verstanden, das mit dem Boden der Staubschutzkappe in Verbindung steht und das im Werkzeughalter sitzende Werkzeug umschliesst. Dank des eingeschlossenen Hohlraumes lässt sich dieser Ringwulst sehr stark elastisch verformen, so dass eine im Durchmesser ganz erheblich veränderbare Durchtrittsöffnung entsteht. Sowohl eine Überdehnung als auch schädliche Reibkräfte treten damit an der Dichtlippe nicht auf. Dadurch ist eine solche Staubschutzkappe sowohl für das mitdrehende Anordnen am Werkzeughalter als auch für das stillstehende Anordnen am Maschinenhals geeignet.

Der Mantel und der Boden können als einstückiges Teil die Staubschutzkappe bilden, wobei diese aus elastischem Material, wie beispielsweise Gummi, besteht. Ebenso ist es auch zweckmässig, den Mantel und den Boden als Einzelteile herzustellen und zu einer Staubschutzkappe zusammenzubauen. Der Vorteil dieser zweiteiligen Ausführungsform liegt in der unterschiedlichen und damit optimalen Materialwahl für den Mantel und den Boden.

Vorzugsweise ist der Ringwulst vom eingestülpten und sich an der Innenwandung des Mantels abstützenden freien Randbereich des Bodens gebildet. Durch das besagte Abstützen des freien Randbereichs wird dem Ringwulst trotz hoher Verformbarkeit eine für die ausreichende Abdichtung am Bohrwerkzeug wesentliche Formstabilität vermittelt.

Die axiale Länge des Ringwulstes entspricht mit Vorteil etwa dem 1- bis 3-fachen des Durchmessers der Durchtrittsöffnung. Ferner entspricht die radiale Höhe des Ringwulstes mit Vorteil dem 1- bis 2-fachen des Durchmessers der Durchtrittsöffnung. Diese Massrelationen gewährleisten eine optimale Abstimmung von Verformbarkeit und Dichtwirkung über einen grossen Bereich von Werkzeugdurchmessern.

Zur Erzielung einer optimalen Abstimmung der Festigkeit des Bodens zur Verformbarkeit des Bodens bzw der Durchtrittsöffnung entspricht die Wandstärke des Bodens vorzugsweise dem 0,2- bis 0,5-fachen des Durchmessers der Durchtrittsöffnung.

Nach einem weiteren Vorschlag der Erfindung weist der freie Randbereich des Ringwulstes eine Wandverstärkung auf. Beim Einführen eines Werkzeugs mit grösstmöglichem Durchmesser wird der Ringwulst flachgedrückt, wobei sich die Wandverstärkung an der Innenwandung des Mantels abstützt. Der an die Wandverstärkung angrenzende flachgedrückte Bereich des Ringwulstes behält einen dem Ausmass der Wandverstärkung entsprechenden Abstand zur Innenwandung des Mantels, um unter Vorspannung das Werkzeug dichtend zu umschliessen.

Die Erfindung wird nachstehend anhand einer Zeichnung, die ein Ausführungsbeispiel wiedergibt, näher erläutert. Es zeigen:

Fig. 1 einen Teil einer Handbohrmaschine mit Werkzeug halter und eingesetztem Werkzeug mittleren Durchmessers in Ansicht sowie eine Staubschutzkappe in Schnittdarstellung;

Fig. 2 die Anordnung nach Fig. 1 mit einem Werkzeug kleinen Durchmessers;

Fig. 3 die Anordnung nach Fig. 1 mit einem Werkzeug grossen Durchmessers.

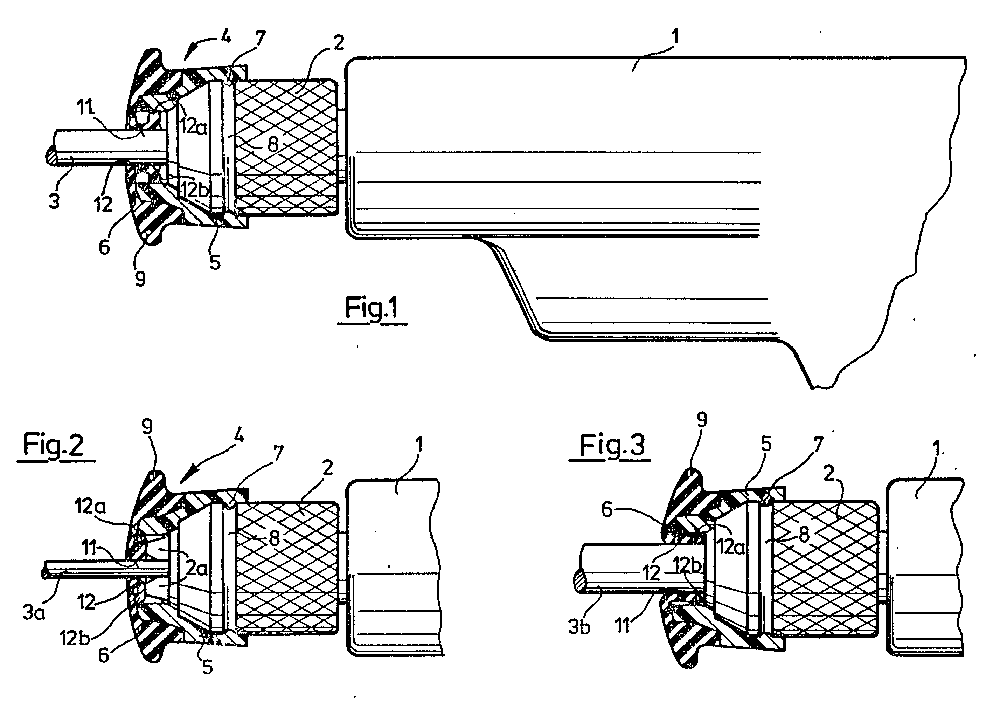

Die in Fig. 1 teilweise dargestellte Handbohrmaschine 1 trägt vorderseitig einen Werkzeughalter 2, beispielsweise in Form eines Dreibackenfutters. In den Werkzeughalter 2 ist ein Werkzeug 3, zumeist ein Bohrer, mit einem Durchmesser mittlerer Grösse eingesetzt. Auf dem Werkzeughalter 2 sitzt eine insgesamt mit 4 bezeichnete Staubschutzkappe.

Die Staubschutzkappe 4 besteht aus einem Mantel 5 aus Kunststoff und einem Boden 6 aus gummielastischem Material. Innenseitig weist der Mantel 5 eine umlaufenden Erhebung als Verbindungselement 7 auf, die in einer Ringnut 8 am Werkzeughalter 2 einrastet. Der Boden 6 ist mit einem umlaufenden Schutzbund 9 versehen. Zentrisch zum Mantel 5 weist der Boden 6 eine Durchtrittsöffnung 11 für das Werkzeug 3 auf. Die Durchtrittsöffnung 11 umfasst das Werkzeug 3 federnd mit einer Dichtlippe, die ihrerseits durch einen Ringwulst 12 geschaffen ist. Der freie Randbereich 12a stützt sich mit einer Wandverstärkung 12b an der Innenwandung des Mantels 5 ab.

Wird in den Werkzeughalter 2 ein Werkzeug 3a mit kleinem Durchmesser eingesetzt, wie dies die Fig. 2 zeigt, so kommt es ebenso zu einem dichtenden Umfassen des Werkzeugs durch den Ringwulst 12 unter Abstützung dessen Randbereichs 12a an der Innenwandung des Mantels 5. In Verbindung mit einem Werkzeughalter 2 in Form eines Dreibackenfutters tritt eine Erhöhung der Dichtwirkung auf, indem die beim Spannen kleiner Werkzeugdurchmesser vortretenden Backen 2a mit ihrer Stirnseite gegen den Ringwulst 12 drücken, der auf diese Weise sich unter grösserer Kraft am Werkzeug 3a anlegt.

Bei Verwendung eines Werkzeugs 3b mit grösstmöglichem Durchmesser, wie dies die Fig. 3 zeigt, wird der Ringwulst 12 flachgedrückt, wobei sich die Wandverstärkung 12b an der Innenwandung des Mantels 5 abstützt. Durch das Flachdrücken des Ringwulstes 12 liegt dieser unter Vorspannung dichtend am Werkzeug 3b an.

## Patentansprüche

1. Napfartige Staubschutzkappe für der Aufnahme von Bohrwerkzeugen (3) in Handbohrmaschinen (1) dienende Werkzeughalter, deren Mantel (5) Verbindungselemente (7) zur Festlegung und deren Boden (6) eine Durchtrittsöffnung (11) für das Werkzeug aufweist, wobei der Boden eine elastische Dichtlippe zum dichtenden Umfassen des Werkzeuges aufweist, dadurch gekennzeichnet, dass die Dichtlippe als elastisch federnder Ringwulst (12) ausgebildet ist.

2. Staubschutzkappe nach Anspruch 1, dadurch gekennzeichnet, dass der Ringwulst (12) vom eingestülpten und sich an der Innenwandung des Mantels (5) abstützenden freien Randbereich (12a) des Bodens (6) gebildet ist.

3. Staubschutzkappe nach Anspruch 1 oder 2, dadurch gekennzeichnet, dass die axiale Länge des Ringwulstes (12) etwa dem 1- bis 3-fachen des Durchmessers der Durchtrittsöffnung (11) entspricht.

4. Staubschutzkappe nach einem der Ansprüche 1 bis 3, dadurch gekennzeichnet, dass die radiale Höhe des Ringwulstes (12) dem 1- bis 2-fachen des Durchmessers der Durchtrittsöffnung (11) entspricht.

5. Staubschutzkappe nach einem der Ansprüche 1 bis 4, dadurch gekennzeichnet, dass die Wandstärke des Bodens (6) dem 0,2- bis 0,5-fachen des Durchmessers der Durchtrittsöffnung (11) entspricht.

6. Staubschutzkappe nach einem der Ansprüche 1 bis 5, dadurch gekennzeichnet, dass der freie Randbereich (12a) des Ringwulstes (12) eine Wandverstärkung (12b) aufweist.

## Claims

1. A cup-like dust guard cap for tool holders serving for the reception of drilling tools (3) in handoperated drilling machines (1), the jacket (5) of which has connection elements (7) for the securing and the base (6) of which has a passage aperture (11) for the tool, in which respect the base has an elastic sealing lip for the sealing embracing of the tool, characterised in that the sealing lip is designed as an elastically resilient annular bead (12).

2. A dust guard cap according to claim 1, characterised in that the annular bead (12) is formed by the turned back free edge region (12a), supported on the inner wall of the jacket (5), of the base (6).

3. A dust guard cap according to claim 1 or 2, characterised in that the axial length of the annular bead (12) corresponds to 1 to 3 times the diameter of the passage aperture (11).

4. A dust guard cap according to one of claims 1 to 3, characterised in that the radial height of the annular bead (12) corresponds to 1 to 2 times the diameter of the passage aperture (11).

5. A dust guard cap according to one of claims 1 to 4, characterised in that the wall thickness of the base (6) corresponds to 0.2 to 0.5 times the diameter of the passage aperture (11).

6. A dust guard cap according to one of claims 1 to 5, characterised in that the free edge region (12a) of the annular bead (12) has a wall reinforcement (12b).

## Revendications

1. Bonnet pare-poussière en forme de cuvette pour des porte-outils destinés à la fixation d'outils de perçage (3) dans des perceuses à main (1), dont l'enveloppe (5) comprend des éléments de raccordement (7) pour la fixation et dont le fond (6) est pourvu d'une ouverture (11) pour le passage de l'outil, le fond présentant une lèvre d'étanchéité élastique pour envelopper l'outil de manière étanche, caractérisé en ce que la lèvre d'étanchéité est conformée en bourrelet annulaire (12) élastique.

2. Bonnet pare-poussière selon la revendication 1, caractérisé en ce que le bourrelet annulaire (12) est constitué par la zone marginale libre (12a) du fond (6) qui est retournée vers l'intérieur et s'appuie sur la paroi intérieure de l'enveloppe (5).

3. Bonnet pare-poussière selon l'une des revendications 1 ou 2, caractérisé en ce que la longueur axiale du bourrelet annulaire (12) correspond approximativement à 1 à 3 fois le diamètre de l'ouverture de passage (11).

4. Bonnet pare-poussière selon l'une quelconque des revendications 1 à 3, caractérisé en ce que la hauteur radiale du bourrelet annulaire (12) correspond à 1 à 2 fois le diamètre de l'ouverture de passage (11).

5. Bonnet pare-poussière selon l'une quelconque des revendications 1 à 4, caractérisé en ce que l'épaisseur de paroi du fond (6) correspond à 0,2 à 0,5 fois le diamètre de l'ouverture de passage (11).

6. Bonnet pare-poussière selon l'une quelconque des revendications 1 à 5, caractérisé en ce que la zone marginale libre (12a) du bourrelet annulaire (12) présente un renforcement de paroi (12b).

Fig.1

Fig.2

Fig.3

1